Europäisches Patentamt

European Patent Office

Office européen des brevets

(11) Publication number: **0 204 362**
**A1**

## (12) EUROPEAN PATENT APPLICATION

(21) Application number: 86200860.4

(22) Date of filing: 20.05.86

(51) Int. Cl.⁴: **B67D 5/44** , F16L 29/00 ,
F16L 41/08 , D06F 39/02

(30) Priority: 29.05.85 GB 8513481

(43) Date of publication of application:
**10.12.86 Bulletin 86/50**

(84) Designated Contracting States:
**AT BE CH DE FR GB IT LI NL SE**

(71) Applicant: **UNILEVER NV**
**Burgemeester s'Jacobplein 1 P.O. Box 760**
**NL-3000 DK Rotterdam(NL)**
Applicant: **UNILEVER PLC**
**Unilever House Blackfriars P.O. Box 68**
**London EC4P 4BQ(GB)**

(72) Inventor: **Bunschoten, Gerrit Klaas**
**Laan van Zuylenveld 48**
**NL-3611 AJ Oud Zuilen(NL)**
Inventor: **Claassens, Marinus Ludovicus**
**Maria**
**Basaltdijk 19**
**NL-4706 DP Roosendaal(NL)**

(74) Representative: **Van Gent, Jan Paulus et al**
**Unilever N.V. Patent Division P.O. Box 137**
**NL-3130 AC Vlaardingen(NL)**

(54) **Liquid product packaging and dispensing assembly.**

(57) Assembly comprises a preferably collapsible liquid-product container (1), a pump (3) and tube (4) liquid-transporting system and a quick coupling device (5) for connecting the tube to the container, the coupling device comprising a suction (16) extending into the container, a mating tube-adaptor member - (7) and a non-return valve (17) in its passage. The system provides optimal user convenience and safety, allowing quick and safe connection of replacement liquid-product containers to the tube and pumping system.

Fig.1.

## LIQUID-PRODUCT PACKAGING AND DISPENSING ASSEMBLY

The present invention relates to a liquid-product packaging and dispensing assembly.

In many areas of trade it is custom to deliver liquid products such as liquid chemicals, sanitizer solutions, detergent products and the like, in storage containers or drums from which these products are subsequently pumped to the actual site of use.

Containers of this type function as packaging system during the storage and the transport of the liquid product and function as product reservoirs during use. At use they are connected to the tube system through which the product is pumped to the site of application. When the container is empty it is simply replaced by a full one.

In general conventional systems are open, i.e. vented, systems, and connection to the tube system is established by way of inserts through the open mouth of the container.

In particular when disconnecting the container from the tube system the user has to perform a number of operations which are likely to cause spilling and spattering of liquid product. In view of user convenience and the often hazardous nature of the liquid materials used this is undesirable if not unacceptable.

It is now an object of the present invention to provide a liquid product packaging and dispensing assembly which gives optimal user convenience in that it allows quick and safe connecting and disconnecting operations without the risk of spilling or draining of product.

It is a further object to provide such an assembly which can cope with relatively viscous products.

It is still a further object to provide such an assembly which can be constructed such that it constitutes a completely closed system.

It is still a further object to provide such an assembly which is of simple construction and of sufficient economy in manufacture.

The packaging and dispensing assembly according to the present invention now comprises a container for holding liquid product, a pump and tube system for pumping liquid product from the container to the site of application, and a coupling device for connecting the tube to the container; the coupling device comprising a suction member having a free end extending into the container and a fixed end disposed in the mouth of the container and capable of receiving in closing contact a mating tube-adaptor member securable to the inlet end of the tube and comprising a non-return valve in its passage.

In view of optimal convenience during storage and transport the container is preferably disposed in a box.

In particular when applied for hazardous liquid materials where a completely closed system is advantageous it is preferred that the container is manufactured from flexible materials such that the container is collapsible.

If so desired, a rigid container can also be used, means being provided for venting the container during use. Preferably then a venting channel is incorporated in the coupling device.

Preferably the container is fitted with a screw cap closure, such that the tube adaptor member is securable onto the suction member by way of an open screw cap which fits the container mouth.

Preferably a pump is used which is of the peristaltic type capable of pumping liquids of a broad range of viscosities.

It is further of advantage to incorporate a low-level alarm, i.e. a device which warns the user when the container is empty or almost empty. A wide variety of such devices are known in the art. When a collapsible container is used, the low-level alarm is preferably based on vacuum measurement. For rigid containers preferably a low level alarm based on conductivity measurement is used, although other detection techniques may also be suitable. A preferred conductivity based low level alarm is described in our co-pending British application No. 8500352.

The invention will now be illustrated in more detail with reference to the accompanying drawing in which:

Figure 1 shows, in a schematic way, a preferred embodiment of an assembly in accordance with the present invention; and

Figure 2 shows an enlarged cross-sectional view of the coupling device incorporated in the assembly shown in Fig.1.

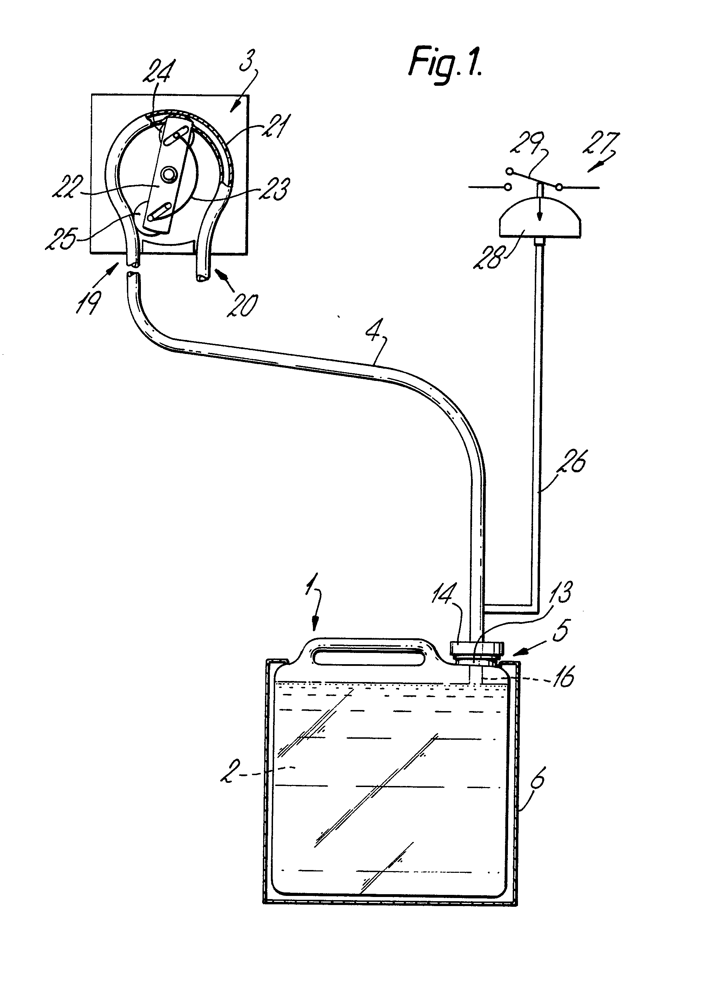

Referring now to Figure 1 a container 1 filled with liquid product 2 is connected to a peristaltic pump 3 by way of a tube 4. Tube 4 is connected to container 1 by means of a coupling device 5.

Container 1 is disposed in a box 6, which has sufficient rigidity to withstand deformation during transport and storage. In general box 6 is manufactured from materials such as cardboard or fibre board.

Container 1 is manufactured from flexible material such as polyethylene and is deformable, the container collapsing when liquid product is pumped to a site of application during use.

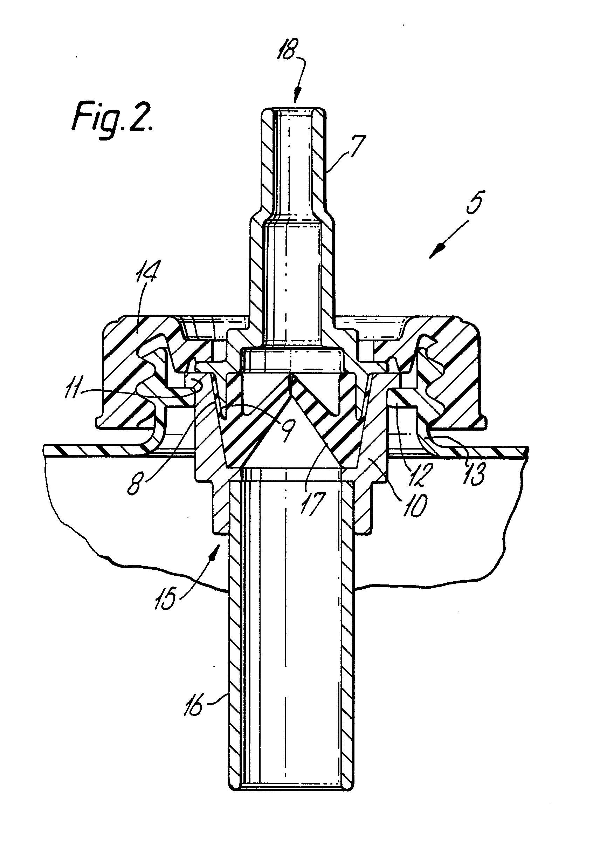

Tube 4 is secured to a tube-adaptor member 7 of coupling device 5 (Fig.2). The conical ring surface 8 of the adaptor member 7 is received by the mating surface 9 of the suction pipe adaptor ring 10. An outer ring flange 11 of ring 10 rests upon an edge 12 of container mouth 13. Adaptor member 7 is pressed into closing contact upon surface 9 by way of an open screw cap 14 fitting container mouth 13. Suction member 15 comprises a suction pipe 16 extending for a limited distance into container 1, and the suction pipe adaptor ring 10. A non-return valve 17 is disposed in passage 18 of the tube adaptor member 7.

Peristaltic pump 3 is of conventional type comprising an inlet 19 and outlet 20 and a semi-circular trajectory 21 along which tube 4 is disposed. The rotor part 22 effectuates the peristaltic action due to rotating of (spring 23)-loaded rollers 24 and 25.

A branch 26 of tube 4 leads to vacuum switch 27 which is part of a low-level alarm circuit (not shown). It comprises a vacuum meter 28 which operates switch 29 as a function of the underpressure in tube 4. If the underpressure exceeds a certain pre-set valve switch 29 is closed resulting in a low-level alarm signal and/or shut-off of pump 3.

The outlet end 19 of tube 4 is connected to a product inlet at the site of application such as e.g. a washing machine (not drawn).

In this preferred embodiment the assembly forms a completely closed packaging and dispensing system. Accordingly when liquid product is pumped from container 1 to the site of application, there is no inlet of air anywhere in the assembly. Container 1 therefore collapses due to the emptying operation during use and the resulting underpressure therein. Near the end of emptying operation the underpressure in the tube system necessary to dispense the remaining product increases. When the underpressure exceeds a certain pre-set valve switch 29 is closed resulting in a low-level alarm signal and/or shut-off of the pumping action. Container 1 is manufactured from flexible materials which allow easy deformation and collapsing thereof.

If so desired, container 1 may also be rigid in which case one or more venting channels are incorporated in suction member 15 or screw cap 14. Instead of the vacuum switch preferably a low level alarm based on conductivity measurement as described in our copending British application 8500352 is incorporated.

When the container is empty the operator can simply replace it by disconnection of tube 4 and tube adaptor member 7 from the empty container and subsequent connection thereof to a full container. In general the full container is delivered in a box 6 and is fitted with a suction member 15 secured in the container mouth 13 by a closed screw cap. At connection to tube 4 the operator only has to replace the closed screw cap by the open screw cap 14 thereby securing the tube adaptor member 7 to the full container.

Due to the non-return valve 17 spilling or spattering of liquid product draining out of tube 4 will substantially be avoided.

## Claims

1. An assembly for packaging and dispensing liquid product which comprises a container for holding liquid product, a pump and tube system for pumping liquid product from the container to the site of application, and a coupling device for connecting the tube to the container; the coupling device comprising a suction member having a free end extending into the container and a fixed end disposed in the mouth of the container and capable of receiving in closing contact a mating tube-adaptor member securable to the inlet end of the tube and comprising a non-return valve in its passage.

2. An assembly according to claim 1 wherein the container is disposed in a box.

3. An assembly according to claim 1 or 2 wherein the container is collapsible.

4. An assembly according to claim 1 or 2 wherein the container is rigid, the coupling device comprising one or more channels for venting the container.

5. An assembly according to any one of the preceding claims wherein the tube-adaptor member is securable onto the suction member by way of an open screw cap which fits the container mouth.

6. An assembly according to any one of the preceding claims wherein the pump is a peristaltic pump.

7. An assembly according to any one of the preceding claims which comprises a low-level alarm.

8. An assembly according to any one of the preceding claims wherein the members of the coupling device have mating surfaces of conical shape.

9. A container-in-box combination for use in the assembly according to any one of the preceding claims 2 to 8.

10. A coupling device for use in the assembly according to any one of the preceding claims 1 to 9.

Fig.1.

Fig.2.

European Patent
Office

**EUROPEAN SEARCH REPORT**

Application number

EP 86 20 0860

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 484 697 (FRY)<br><br>* Column 5, line 14 - column 7, line 28; figures 1-12 * | 1-3,9, 10 | B 67 D 5/44<br>F 16 L 29/00<br>F 16 L 41/08<br>D 06 F 39/02 |
| Y | | 5,6,8 | |
| | --- | | |
| Y | US-A-4 548 344 (BOMATIC)<br><br>* Column 5, lines 16-64; figures 8,9 * | | |
| | --- | | |
| Y | FR-A-2 406 604 (EMAC)<br>* Page 5, lines 16-31; figure 1 * | 6 | |
| | --- | | |
| Y | FR-A-1 127 478 (FARKAS)<br>* Figure 1 * | 8 | **TECHNICAL FIELDS SEARCHED (Int. Cl.4)** |
| | ----- | | B 67 D<br>D 06 F<br>F 16 L |

The present search report has been drawn up for all claims

| Place of search | Date of completion of the search | Examiner |
|---|---|---|
| THE HAGUE | 08-09-1986 | VROMMAN L.E.S. |